# EUROPEAN PATENT APPLICATION

(11) **EP 4 810 340 A2**
(43) Date of publication of application: **23.09.2026**
(21) Application number: 26190308.2
(22) Date of filing: 05.05.2023
(51) Int. Cl.: B60W 50/08

(54) **SPEED CONTROL SYSTEM FOR A VEHICLE AND METHOD**

(30) Priority: 10.05.2022 GB 202206825
(62) Document number(s) of the earlier application(s) in accordance with Art. 76 EPC: 23726289.4 / 4 522 473
(71) Applicant: Jaguar Land Rover Limited, Coventry CV3 4LF (GB)
(72) Inventor: JAVED, Usmaan, Coventry, CV3 4LF (GB); UD DIN, Waqar, Coventry, CV3 4LF (GB); FAIRGRIEVE, Andrew, Coventry, CV3 4LF (GB)
(74) Representative: Jaguar Land Rover Patents Department

(57) **Abstract**

Aspects of the present invention relate to a speed control system (15) for a vehicle (10), to a method and to a vehicle (10). The system causes the vehicle (10) to drive at a target speed value. The speed control system (15) receives a turn indicator status signal indicative of a state of a turn signal indicator control of the vehicle. The system (15) determines a turn indicator target speed limit in dependence on the turn indicator status signal and controls the vehicle in accordance with the turn indicator target speed limit.

## Description

### TECHNICAL FIELD

The present disclosure relates to a control system for a vehicle and method. Aspects of the invention relate to a speed control system for a vehicle, a system for controlling a speed of a vehicle, a vehicle, a method of controlling a speed of a vehicle and a non-transitory, computer-readable storage medium.

The content of WO2013/124321 is hereby incorporated by reference.

### BACKGROUND

It is known to provide a speed control system for a vehicle, in particular a speed control system for causing a vehicle to operate in accordance with a target speed value. It is desirable to provide an improved speed control system for assisting a driver negotiate terrain.

It is an aim of the present invention to address one or more of the disadvantages associated with the prior art.

### SUMMARY OF THE INVENTION

Aspects and embodiments of the invention provide a speed control system, a system for controlling a speed of a vehicle, a vehicle and a method of controlling a speed of a vehicle as claimed in the appended claims
According to an aspect of the present invention there is provided a speed control system for a vehicle, the speed control system configured to cause the vehicle to operate in accordance with a target speed, the speed control system comprising one or more controllers, the speed control system configured to:
receive a turn indicator status signal indicative of a state of a turn signal indicator control of the vehicle;
determine a turn indicator target speed limit in dependence on the turn indicator status signal; and
control the vehicle in accordance with the turn indicator target speed limit.

Embodiments of the present invention have the advantage that vehicle composure and driver workload may be reduced. This is at least in part because the applicant has recognised that, by reducing speed automatically according to the state of a turn indicator of the vehicle, excessive braking immediately prior to turning may be avoided, since the vehicle automatically reduces speed in advance of turning, when a left or right turn indicator is selected. By causing a speed reduction to be triggered responsive to turn indicator information, user enjoyment may therefore be enhanced.

Optionally, the speed control system is configured to receive a terrain indicator parameter indicative of a nature of terrain over which the vehicle is travelling, wherein the turn indicator target speed limit is determined in dependence on the terrain indicator parameter.

This feature has the advantage that the speed may be reduced to a speed appropriate to initiating a turn on the terrain over which the vehicle is travelling. The turn indicator target speed limit may be lower for relatively slippery and/or fragile surfaces such as grass, gravel or snow compared to less slippery and/or more robust surfaces such as tarmac or concrete.

Optionally, the terrain indicator parameter is determined in dependence on:
a signal indicative of driver selection of a terrain type; or
a signal indicative of terrain type generated by a further vehicle system in dependence on vehicle sensor information.

Systems of selecting or automatically recognizing a terrain type (or nature of terrain) form no part of the present invention, but typically allow surfaces such as rock, mud, sand and snow to be distinguished so as to better adapt the vehicle systems to the terrain upon which the vehicle is travelling. The signal indicative of driver selection of a terrain type may for example be a signal indicative of a driving mode in which the vehicle is operating such as a terrain response (TR) mode. The TR mode may for example be a driver selected TR mode or a TR mode selected automatically by the vehicle based on vehicle sensor information.

Optionally, the speed control system is configured to receive an occupant comfort parameter indicative of a desired level of occupant comfort, and wherein the turn indicator target speed limit is determined in further dependence at least in part on the occupant comfort parameter.

This feature has the advantage that user enjoyment may be enhanced, since vehicle speed may be more closely aligned with occupant expectations. It is to be understood that in some embodiments the selection of an increased level of comfort reduces the turn indicator target speed limit. However, this may have the disadvantage of resulting in an increased journey time. A user may therefore set the desired comfort value according to their preference.

Optionally, the speed control system is configured to receive map information indicative of a geography of one or more paths ahead of a vehicle, wherein the turn indicator target speed limit is determined in dependence on the map information.

Optionally, the speed control system is configured to:
determine a predicted route of the vehicle in dependence on the map information and the turn indicator status signal; and
determine the turn indicator target speed limit in dependence on the predicted route.

Optionally, the turn indicator status signal comprises a left turn indicator status signal or a right turn indicator status signal, the speed control system being configured to:
determine a predicted route of the vehicle in dependence on the map information and the left turn indicator status signal or the right turn indicator status signal; and
determine the turn indicator target speed limit in dependence on the predicted route.

It is to be understood that, in the event that a junction is present ahead of the vehicle, the turn indicator status signal may assist the speed control system to predict the likely route of the vehicle when the junction is reached. The speed control system may therefore set the turn indicator target speed limit to a value appropriate to the predicted path of the vehicle when the junction is reached.

Optionally, the speed control system is configured wherein the turn indicator target speed limit is lower the sharper the turn predicted to be made on the predicted route.

Optionally, the speed control system is configured to:
receive vehicle turning information indicative that the vehicle is turning; and
limit vehicle speed in dependence on the vehicle turning information.

It is to be understood that by turning information is meant information regarding turning of the vehicle about a substantially vertical axis with respect to the vehicle, being an axis normal to longitudinal and lateral axes of the vehicle.

Optionally, the vehicle turning information comprises information indicative of at last one of:
vehicle lateral acceleration; and
yaw rate of the vehicle,
the speed control system being configured to limit vehicle speed in dependence at least in part on one or both of vehicle lateral acceleration and yaw rate.

It is to be understood that the speed control system may be configured to limit vehicle speed to the vehicle turning speed limit at least in part when lateral acceleration or yaw rate exceed respective predetermined values for respective predetermined time periods. In addition to or instead of lateral acceleration and/or yaw rate information, the vehicle turning information may comprise information indicative of steering wheel position, vehicle path information such as information indicative of a radius of curvature of vehicle path, or any other suitable information.

The vehicle turning speed limit may be determined at least in part based on the lateral acceleration rate, the vehicle turning speed limit value being lower for higher values of lateral acceleration rate compared with lower values of lateral acceleration rate.

The vehicle turning speed limit value may be determined at least in part based on the yaw rate, the vehicle turning speed limit value being lower for higher values of yaw rate than for lower values of yaw rate.

Optionally, the speed control system is configured to limit vehicle speed in dependence on the vehicle turning information and terminate limiting vehicle speed to the turn indicator target speed limit when the vehicle turning information indicates that vehicle speed should be reduced to a value equal to or less than the turn indicator target speed limit.

Optionally, the speed control system is configured wherein, when the speed control system terminates limiting vehicle speed to the turn indicator target speed limit, the speed control system does not subsequently permit the vehicle speed to be limited to the turn indicator target speed limit until after the turn indicator status signal indicates that the state of the turn indicator corresponds to neither a left turn nor a right turn.

In a further aspect of the invention there is provided system for controlling a speed of a vehicle comprising:
a speed control system according to another aspect; and
a turn indicator configured to output a turn indicator status signal indicative of a state of the turn indicator.

In another aspect of the invention there is provided a vehicle comprising the speed control system of a preceding aspect or the system of a preceding aspect.

In an aspect of the invention there is provided a method of controlling a speed of a vehicle implemented by a speed control system, comprising causing the vehicle to operate in accordance with a target speed, the method further comprising:
receiving a turn indicator status signal indicative of a state of a turn indicator of a vehicle;
determining a turn indicator target speed limit in dependence on the turn indicator status signal; and
controlling the vehicle in accordance with the turn indicator target speed limit.

In a further aspect of the invention there is provided a non-transitory, computer-readable storage medium storing instructions thereon that, when executed by one or more electronic processors, causes the one or more electronic processors to carry out the method of a preceding aspect.

In an aspect of the invention there is provided a method of controlling a speed of a vehicle implemented by a speed control system, comprising:
causing the vehicle to operate in accordance with a target speed; and
receiving a turn indicator status signal indicative of a state of a turn indicator of a vehicle,
the method comprising limiting vehicle speed in dependence at least in part on the turn indicator status signal.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle having a speed control system according to an embodiment of the invention;
Figure 2 shows a schematic representation of a steering wheel of a vehicle having a speed control system according to an embodiment of the invention;
Figure 3 shows a schematic representation of a speed control system according to an embodiment of the invention;
Figure 4 shows a plot of vehicle speed, VREF, as a function of time, in an example scenario encountered by the vehicle of Figure 1;
Figure 5 is a flow diagram illustrating operation of a max indicator set speed calculation portion of the speed control system of Figure 3;
Figure 6 is a flow diagram illustrating operation of a max set speed calculation portion of the speed control system of Figure 3; and
Figure 7 is a schematic illustration of an electronic controller comprised by a vehicle control unit or system (VCU) configured to implement the speed control system of the embodiment of FIG. 3.

### DETAILED DESCRIPTION

The content of WO2013/124321 is hereby incorporated by reference.

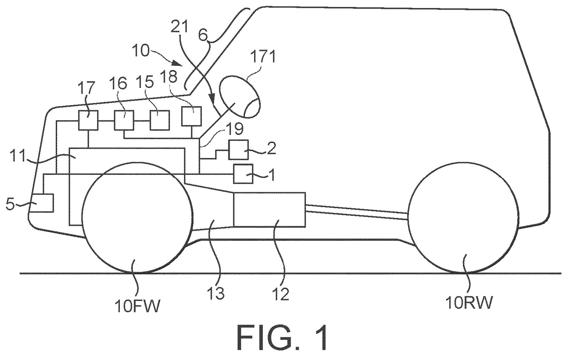

FIG. 1 is a schematic illustration of a vehicle 10 according to an embodiment of the present invention. The vehicle 10 has a prime mover or motor 11 in the form of an internal combustion engine. The engine 11 is coupled to a transmission 12 by means of a coupling 13. The coupling 13 is arranged to allow the transmission 12 progressively to reach a speed compatible with motor speed when the vehicle 10 is accelerated from rest. The coupling 13 is typically a friction clutch, torque converter or the like. The transmission 12 is arranged to drive a pair of rear wheels 10RW and optionally a pair of steerable front wheels 10FW in addition. An accelerator pedal 1 allows a driver to control an amount of torque developed by the motor 11 under the control of a powertrain controller 17 whilst a brake pedal 2 allows a driver to apply a braking system under the control of a brake controller 16. A driving mode selector 19 is provided by means of which a driver may select an on-road driving mode or one of a plurality of off-road driving modes which include a grass/gravel/snow (GGS) driving mode, sand (S) driving mode and a mud and ruts (MR) driving mode. In some embodiments the selector also allows an 'automatic response mode' to be selected in which the vehicle 10 determines automatically the optimum driving mode at any given moment in time. The driving modes may be referred to as "terrain response" (or "TR") modes.

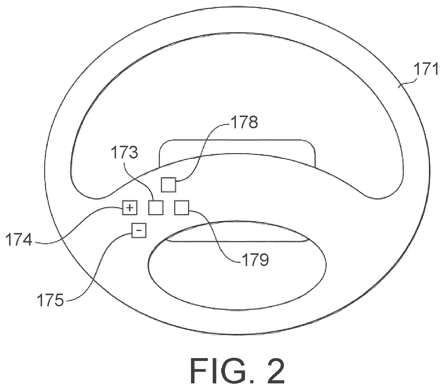

The vehicle 10 has a vehicle control unit (VCU) 15 that is operable to implement a low-speed vehicle speed control function or system. The low-speed vehicle speed control function may also be referred to as an 'off-road' or 'off-highway' speed control function or system or system off-road or off-highway cruise control function or system. The low-speed vehicle speed control function is operable provided vehicle speed VREF does not exceed a predetermined maximum speed. In the present embodiment the predetermined maximum speed is 30 km/h. Above 30 km/h the VCU 15 is operable to implement a higher-speed speed control function or system. The VCU 15 may be described as implementing a low-speed speed control system or a higher-speed speed control system. Both the low-speed speed control system and higher-speed speed control system functionality is controlled by a user by means of input controls mounted to a steering wheel 171 of the vehicle 10. The steering wheel 171 is shown in more detail in FIG. 2. It is to be understood that the low-speed vehicle speed control function or system may be useful when driving in off-highway driving conditions whilst the higher-speed speed control function or system may be useful when driving in on-highway driving conditions such as on a relatively smooth, dry tarmac or concrete driving surface.

The input controls include a 'set-speed' control 173, actuation of which sets the value of a parameter driver_set_speed to be substantially equal to the current vehicle speed. Depression of a '+' (or 'plus') button 174 allows the set-speed to be increased whilst depression of a '-' (or 'minus') button 175 allows the set-speed to be decreased. In some embodiments, if the speed control function is not active when the '+' button 174 is depressed, the speed control function is activated.

In the present embodiment, the VCU 15 is configured to implement an active speed control system (or 'active cruise control') when the higher-speed speed control system is operating. The active speed control system is configured to cause the vehicle 10 to maintain a predetermined distance behind a lead vehicle in certain situations as will be explained. The wheel 171 also has a pair of following distance control buttons 178, 179 for setting a value of a parameter distance_ following, being the distance the driver desires the vehicle 10 to maintain behind the lead vehicle. The VCU 15 is operable to control the vehicle 10 to maintain a distance behind a lead vehicle that is substantially equal to a distance represented by a parameter distance_following. A first of the buttons 178 is operable to increase the value of the parameter distance_following, and therefore the distance between the vehicle 10 and the lead vehicle, whilst a second of the buttons 179 is operable to decrease the value of the parameter distance_following. The vehicle 10 has a radar module 5 mounted to a front thereof and arranged to project a radar beam in a direction ahead of the vehicle 10. The module 5 is arranged to detect radiation reflected by a lead vehicle and to determine a distance of the lead vehicle from vehicle 10 (being a 'host' vehicle). The module 5 is provided with a signal indicative of a current speed of the host vehicle 10. From this signal and data in respect of a variation in distance of the lead vehicle from the host vehicle 10 as a function of time, the module 5 is able to calculate a speed of the lead vehicle. Other arrangements for determining distance from the lead vehicle and speed of the lead vehicle are also useful. In some embodiments, active speed control functionality is not provided and the following distance control buttons 178, 179 are omitted. In some embodiments, the radar module 5 is omitted.

The higher-speed speed control system is not the subject of the present application. The remainder of the present description relates to the low-speed speed control system unless otherwise stated.

When the low-speed speed control system is activated, the VCU 15 controls the speed of the vehicle 10 in accordance with a target speed value which is set substantially equal to a driver selected set-speed, driver_set_speed, or a lower value if this is desirable as described in more detail below. The VCU 15 does this by calculating a maximum allowable speed, max_set_speed, of the vehicle 10 at a given moment in time. The VCU 15 sets the value of max_set_speed to the value of driver set-speed, driver_set_speed, unless a lower value is desirable as described in more detail below. The VCU 15 controls the speed of the vehicle 10 in accordance with max_set-speed, being a target speed value for the vehicle, by causing vehicle speed VREF to be equal to the value of max_set_speed.

The VCU 15 then outputs to a powertrain controller 30 (or control system) and brake controller 16 (or control system) a target value of acceleration at a given moment in time, acc_tgt, in order to cause vehicle speed, as determined by reference to the vehicle reference speed VREF, to maintain the desired value. If the driver overrides the speed control system and VREF exceeds 30km/h, the speed control system suspends operation until VREF falls to 30km/h or less. In some embodiments the VCU 15 outputs the target value of acceleration at a given moment in time, acc_tgt, to a different vehicle system in addition or instead.

The driver may set the value of driver_set_speed of the low-speed speed control system to the current vehicle speed, VREF (provided VREF does not exceed 30km/h), by depressing the 'set-speed' control 173 whilst the vehicle 10 is travelling. When the VCU 15 detects that the 'set-speed' control 173 has been pressed, the VCU 15 takes a snapshot of the current speed of the vehicle 10, VREF, and sets the value of driver_set_speed to correspond to the current speed. (It is to be understood that, if VREF exceeds 30 km/h and the set-speed control 173 is pressed, the higher-speed speed control system is activated. In the present embodiment the low-speed speed control system will not automatically reactivate once the speed falls below 30km/h if the higher-speed speed control system has been activated since the value of driver_set_speed has been set to a value exceeding 30 km/h). As described above, when the vehicle 10 is travelling along a road and the higher-speed speed control system is active, i.e. VREF and driver_set_speed exceed a minimum allowable set-speed set_speed_min, in the present embodiment 30 km/h, the VCU 15 is operable to allow the user to command the VCU 15 to maintain the current vehicle speed by depressing set-speed control 173. In the absence of traffic ahead of the vehicle 10 or other factors requiring a lower speed (see below), the VCU 15 controls the speed of the vehicle 10 VREF to maintain VREF substantially equal to the set-speed value driver_set_speed.

In the present embodiment, if the VCU 15 detects (by means of radar module 5) the presence of a lead vehicle ahead of the vehicle 10, the VCU 15 is operable to reduce the speed of the host vehicle 10 according to the speed of the lead vehicle in order to maintain a distance behind the lead vehicle that is no less than a prescribed distance. The prescribed distance may be set by a driver by means of 'following distance' control buttons 178, 179 as noted above. This function is only available in the higher-speed speed control system is active.

The vehicle 10 has a human machine interface (HMI) in the form of a touchscreen 18 by means of which the VCU 15 may communicate with a user. As described above, when the low-speed speed control system is active, the VCU 15 is operable to calculate a maximum allowable value of set-speed, max_set_speed, in dependence on the terrain over which the vehicle is travelling. Thus, the VCU 15 is operable to limit the maximum speed at which it will control a vehicle 10 to operate in dependence on the terrain. Embodiments of the invention allow improved vehicle composure when operating in off-highway conditions with reduced driver intervention. That is, because the VCU 15 determines the maximum allowable value max_set_speed of the set-speed and limits the set-speed accordingly, a driver is not required to intervene in order to reduce the value of vehicle set-speed when the prevailing terrain so warrants, and to increase the set-speed when the prevailing terrain allows.

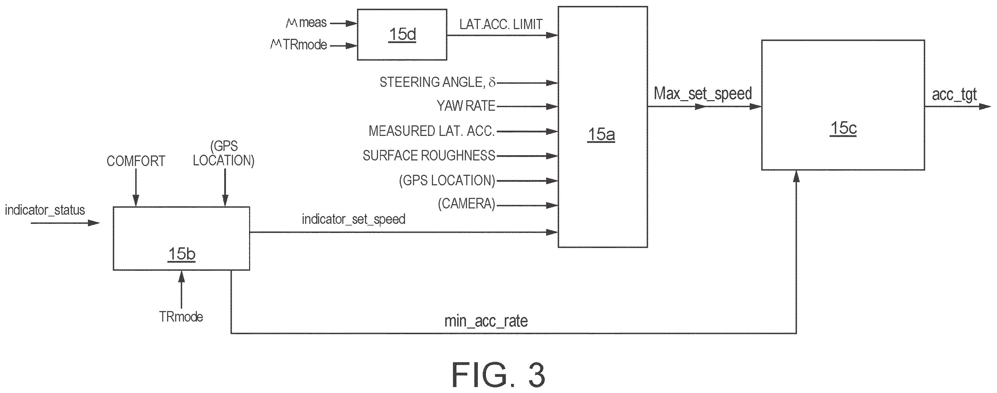

FIG. 3 illustrates a manner in which the VCU 15 determines a value of max_set_speed. The

VCU 15 includes a 'max set speed calculation' portion (or 'engine') 15a, a 'max indicator set speed calculation' portion (or 'engine') 15b and a 'vehicle acceleration calculation' portion (or 'engine') 15c. Additionally, an input to the 'max set speed calculation' portion (or 'engine') 15a comprises a 'lateral acceleration limit calculation' portion 15d.

The 'vehicle acceleration calculation' portion 15c is configured to calculate a desired acceleration rate of the vehicle 10 at a given moment in time based on inputs received, including inputs from the 'max set speed calculation' portion 15a and the 'max indicator set speed calculation' portion 15b. The 'vehicle acceleration calculation' portion 15c is configured to calculate a desired acceleration rate of the vehicle in order to maintain the value of vehicle speed, VREF, equal to the value of max_set_speed received by the 'vehicle acceleration calculation' portion 15c from the 'max set speed calculation' portion 15a. Thus, the VCU 15 controls vehicle speed, VREF, in accordance with a target speed value which determines the max_set_speed.

The 'max set speed calculation' portion 15a of the VCU 15 is configured to receive inputs corresponding to a number of vehicle parameters in addition to the current value of driver_set_speed. As described above, the 'max set speed calculation' portion 15a outputs a value of max_set_speed that is no greater than the value of driver_set_speed but may be lower if the 'max set speed calculation' portion 15a determines that driving conditions so demand, as described in further detail below. The parameters are: (a) a current vehicle reference value of surface coefficient of friction, µmeas, being a value calculated by the VCU 15 based on values of one or more parameters such as an amount of torque applied to a wheel at which excessive wheel slip was induced; (b) a value of expected surface coefficient of friction corresponding to a currently selected vehicle driving mode, µTRmode, being a prescribed value for each driving mode; (c) a current value of steering angle, corresponding to a steerable road wheel angle or steering wheel position 'STEERING ANGLE, δ'; (d) a current yaw rate of the vehicle (determined by reference to an output of an accelerometer) , 'YAW RATE'; (e) a current measured value of lateral acceleration, 'MEASURED LAT.ACC.', (also determined by reference to an output of an accelerometer); and (f) a current measured value of surface roughness, 'SURFACE ROUGHNESS', (determined by reference to suspension articulation). In some embodiments, the VCU 15 may also receive (g) a signal indicative of a current location of the vehicle, 'GPS LOCATION', (determined by reference to a global satellite positioning system (GPS) output); and (h) information obtained by means of a camera system, 'CAMERA'. The information obtained by means of a camera system may include for example an alert in the event that it is determined that the vehicle 10 may be about to depart from an off-road lane or track.

The 'lateral acceleration limit calculation' portion 15d of the VCU 15 is configured to determine, from the reference value of surface coefficient of friction, µmeas, and expected value of surface coefficient of friction, µTRmode, a maximum allowable rate of lateral acceleration max_lat_acc of the vehicle 10 during the course of a journey. The VCU 15 employs this value of max_lat_acc to limit the value of max_set_speed when the vehicle is cornering, so as to prevent understeer.

In the present embodiment the 'max set speed calculation' portion 15a of the VCU 15 is also operable to calculate a radius of curvature of a path of the vehicle 10 over terrain based on steering angle. The VCU 15 compares this radius of curvature with the vehicle yaw rate and measured lateral acceleration. If the VCU 15 detects the presence of understeer the VCU 15 is operable to reduce the value of max_set_speed accordingly. In some embodiments where a signal indicative of a current location of the vehicle is received, the VCU 15 may also take into account a path of travel of the vehicle determined by reference to the location signal in order to increase a reliability of the determination of the amount of understeer present, if any.

In some embodiments, yaw rate and measured lateral acceleration are not employed in determining the amount of understeer present. Other arrangements are also useful.

The 'max set speed calculation' portion 15a of the VCU 15 also determines the value of max_set_speed according to a value of surface roughness of the terrain over which the vehicle 10 is driving. The value of max_set_speed may be reduced as the surface roughness increases.

In the present embodiment, the VCU 15 also receives the following signals:
(1) a turn indicator status signal, indicator_status, indicative of the status or 'state' of a turn signal indicator control 21 of the vehicle 10 (FIG. 1);
(2) a signal TRmode indicative of the driving mode (TR mode) in which the vehicle is currently operating; and
(3) a value of a comfort parameter 'COMFORT' indicative of a level of comfort required by an occupant of the vehicle.

It is to be understood that the turn indicator status signal, indicator_status, provides a left turn indicator status signal when the turn signal indicator control 21 is set to indicate a left turn and a right turn indicator status signal when the turn signal indicator control 21 is set to indicate a right turn.

In the present embodiment the signal TRmode is a signal indicative of driver selection of a terrain type by means of driving mode selector 19. It may therefore be considered to provide a terrain indicator parameter that the VCU 15 may employ in determining an appropriate speed for the vehicle 10 at a given moment in time.

In some embodiments, rather than being indicative of driver selection of terrain type, the terrain indicator parameter provided by the signal TRmode may be a signal indicative of the preferred driving mode at any given moment in time determined automatically by the vehicle 10, when the driving mode selector 19 is set to select the 'automatic response mode' as described above.

The signal or input indicative of a desired level of occupant comfort described in the present embodiment is user-selectable, and thus may be referred to as a user-selectable input indicative of a desired level of occupant comfort or a desired value of occupant comfort parameter or a comfort parameter or a level of desired occupant comfort or a value of comfort parameter or being indicative of a level of comfort required by an occupant of the vehicle.

The 'max indicator set speed calculation' portion 15b of the VCU 15 is configured to calculate a value of maximum allowable vehicle speed, indicator_set_speed, based on the indicator_status signal and TRmode signal. The value of indicator_set_speed may also be described as a turn indicator target speed limit. The value of indicator_set_speed is output to the 'max set speed calculation' portion 15a of the VCU 15, which takes the value of indicator_set_speed into account when determining the value of max_set_speed to be output to the 'vehicle acceleration calculation' portion 15c. In the present embodiment, the 'max set speed calculation' portion 15a limits the value of max_set_speed output therefrom such that it does not exceed the value of indicator_set_speed as described below.

In the present embodiment, if the indicator_status signal indicates that the turn signal indicator control 21 is not activated, i.e., the turn signal indicator control 21 is in a neutral position, being a position in which it is not signalling either a left turn or right a turn, the 'max indicator set speed calculation' portion 15b of the VCU 15 is configured to output a value of indicator_set_speed corresponding to the maximum allowable value of vehicle set speed when the low-speed speed control system is operating, being 30km/h in the present embodiment. This is so that the 'max indicator set speed calculation' portion 15b does not cause a reduction in speed of the vehicle 10 when the turn signal indicator control 21 is in the neutral position.

As noted above, the 'max indicator set speed calculation' portion 15b of the VCU 15 is configured to calculate a value of maximum allowable vehicle set-speed at a given moment in time, indicator_set_speed, i.e., a maximum allowable value of vehicle speed based on the indicator_status signal and TRmode signal, when the speed control system 15 is active, i.e. the VCU 15 is controlling vehicle speed in accordance with a value of target speed given by the value of max_set_speed.

In the present embodiment, the value of indicator_set_speed is independent of the value of comfort parameter value. However, in some alternative embodiments, the value of indicator_set_speed is dependent at least in part on comfort parameter value. The value of indicator_set_speed may be lower for higher values of comfort parameter value, which correspond to higher levels of desired occupant comfort.

In the present embodiment, the value of indicator_set_speed is higher when the vehicle 10 is operating in the sand TR mode, i.e., the reduction in vehicle speed when travelling in the sand mode is less severe. This is at least in part so as to ensure that vehicle progress is maintained when travelling over sand.

In the present embodiment, for a given set of driving conditions, the value of indicator_set_speed is arranged to be the highest in Sand mode and lowest in the grass gravel snow (GGS) TR mode. The other TR modes are somewhere in between the two depending on the expected turning speed for that surface. In the present embodiment, the value of indicator_set_speed is higher when the vehicle is operating in the on-highway TR mode compared with the mud and ruts, for a given set of inputs to the max_set_speed calculation portion 15a since it may be assumed that the customer can turn at a higher speed on a tarmac driving surface compared with a mud driving surface.

In the present embodiment, the 'max indicator set speed calculation' portion 15b of the VCU 15 also outputs a signal min_acc_rate to the 'vehicle acceleration calculation' portion 15c. The value of min_acc_rate corresponds to a minimum allowable rate of deceleration of the vehicle from the current vehicle speed, VREF, based on the value of comfort parameter and the TR mode in which the vehicle 10 is operating. It is to be understood that, in the present embodiment, the minimum allowable rate of deceleration is lower for higher required comfort levels. It is to be understood that a minimum allowable rate of deceleration is set so that the VCU 15 is able to control the time or distance over which vehicle speed is reduced to a value not exceeding the determined value of indicator_set_speed, preventing the time or distance from becoming excessive. An excessive time or distance may cause driver inconvenience by causing relatively slow progress to be made over terrain.

It is to be understood that, when the indicator_status signal indicates that the turn signal indicator control 21 is activated, signalling a left or right turn, the value of indicator_set_speed becomes the value calculated by the 'max indicator set speed calculation' portion 15b based on the signal TRmode, rather than being set to output a value of indicator_set_speed corresponding to the maximum allowable value of vehicle set speed when the low-speed speed control system is operating, as discussed above. The max_set_speed calculation portion 15a then ensures that the value of max_set_speed does not exceed the value of indicator_set_speed. Thus, if the value of max_set_speed calculated based on inputs other than the indicator_set_speed signal is greater than the value of indicator_set_speed, the value of max_set_speed is set to the value of indicator_set_speed and the VCU 15 causes the vehicle to operate in accordance with the new value of max_set_speed, indicator_set_speed. Thus, the vehicle speed VREF is caused to become equal to a value of max_set_speed equal to indicator_set_speed.

It is to be understood that the VCU 15 continually monitors vehicle lateral acceleration and yaw rate and determines when the vehicle 10 is turning based on the values of lateral acceleration and yaw rate. In some embodiments the VCU 15 may also include steering wheel angle as a factor when determining when the vehicle 10 is turning. It is to be understood that the values of lateral acceleration, yaw rate and steering wheel angle may provide information indicative that the vehicle may be turning, and may be considered to be sources of vehicle turning information.

The VCU 15 continues to calculate a value of max_set_speed based on the various inputs described above, and the VCU 15 typically causes the value of max_set_speed to reduce below the value of indicator_set_speed once the turn is initiated. The reduction in max_set-speed may be more severe when travelling over fragile surfaces such as grass, or surfaces having a relatively low coefficient of friction.

When the indicator_status signal indicates that the turn signal indicator control 21 is in a position corresponding to signalling a left or right turn, and the value of max_set_speed reduces below the value of indicator_set_speed, due for example to increasing values of lateral acceleration and/or yaw rate, the VCU 15 determines that the turn has been initiated. The VCU 15 then ignores the value of indicator_set_speed when determining the value of max_set_speed until the turn signal indicator control 21 has been reset to the neutral position. This is so as not to inconvenience a driver by maintaining a reduced vehicle speed in the event that the turn signal indicator control 21 fails to cancel once a turn has been completed, i.e., due to the turn signal indicator control 21 failing to resume the neutral position by the time the turn has been completed.

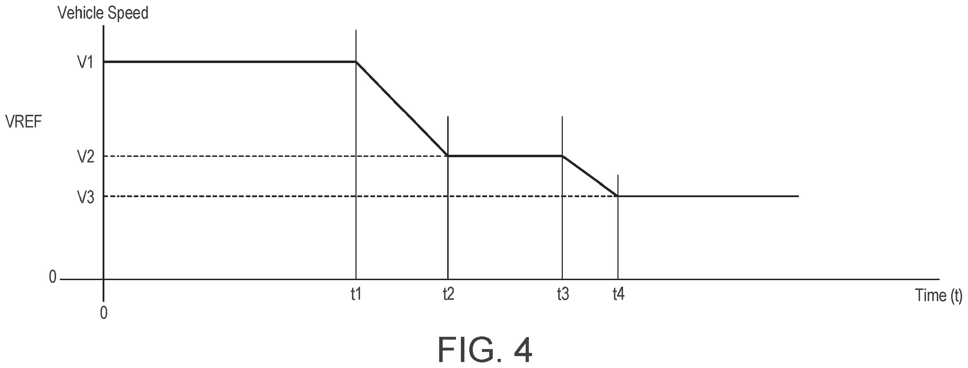

FIG. 4 illustrates a scenario in which, prior to time t=t1, the vehicle 10 is travelling over ground at a speed VREF=V1 with the turn signal indicator control 21 in the neutral position. The 'max indicator set speed calculation' portion 15b of the VCU 15 is outputting a value of indicator_set_speed corresponding to the maximum allowable value when driving off road, i.e., 30km/h. The VCU 15 causes the vehicle 10 to operate in accordance with a target speed set equal to the value of max_set_speed calculated based on inputs to the max_set_speed calculation portion 15a and effectively ignoring the signal indicator_set_speed as described above. Thus, the VCU 15 causes vehicle speed VREF to be substantially equal to max_set_speed.

At time t1 the driver activates the turn signal indicator control 21 to indicate a left or right turn. The 'max indicator set speed calculation' portion 15b of the VCU 15 then calculates a value of maximum allowable vehicle set-speed at a given moment in time, indicator_set_speed, based on the TRmode signal. In the example illustrated in FIG. 4, the value of indicator_set_speed is V2. The value of indicator_set_speed is output to the 'max set speed calculation' portion 15a. The 'max set speed calculation' portion 15a ensures that the value of max_set_speed output thereby does not exceed the value of indicator_set_speed.

The 'max indicator set speed calculation' portion 15b of the VCU 15 also calculates the value of min_acc_rate and outputs this value to the 'vehicle acceleration calculation' portion 15c as described above. The 'vehicle acceleration calculation' portion 15c then causes the vehicle speed VREF to reduce from the current speed, V1, to the value of max_set_speed, which in the present example is limited to indicator_set_speed, V2, at a rate not less than the value of min_acc_rate. It is to be understood that, in some circumstances, the value of max_set_speed may be below the value of indicator_set_speed already, due to the value of other inputs to the 'max set speed calculation' portion 15a such as surface roughness, in which case the value of max_set_speed will not be set to the value of indicator_set_speed until the conditions requiring max_set_speed to fall below indicator_set_speed are no longer met.

As shown in FIG. 4, vehicle speed VREF falls to the value V2 over the period from time t1 to time t2. From time t2 to time t3 the VCU 15 causes the vehicle 10 to operate in accordance with a target speed set equal to the value of indicator_set_speed, i.e. the VCU 15 causes vehicle speed VREF to be substantially equal to indicator_set_speed. At time t3 the vehicle 10 commences the anticipated turn and the VCU 15 determines, by means of 'max set speed calculation' portion 15a, that vehicle speed should be limited to a value less than the current value of indicator_set_speed based on the values of yaw rate and/or measured lateral acceleration.

It is to be understood that, when the indicator_status signal indicates that the turn signal indicator control 21 is in a position corresponding to signalling a left or right turn, and the value of max_set_speed reduces below the value of indicator_set_speed due to the values of lateral acceleration and/or yaw rate, the VCU 15 determines that the turn has been initiated. The VCU 15 then ignores the value of indicator_set_speed when determining the value of max_set_speed until the turn signal indicator control 21 has been reset to the neutral position, as described above. As shown in FIG. 4, at time t3 the 'max set speed calculation' portion 15a outputs to the 'vehicle acceleration calculation' portion 15c a value of max_set_speed that falls to a value V3 and the 'vehicle acceleration calculation' portion 15c causes vehicle speed VREF to fall to the value V3. In FIG. 4 this is shown as occurring at time t4 when the appropriate speed for the turn, V3, is reached.

Meanwhile, the 'max indicator set speed calculation' portion 15b continues to output a value of indicator_set_speed calculated based on TRmode until the indicator_status signal indicates that the turn signal indicator control 21 is in the neutral position.

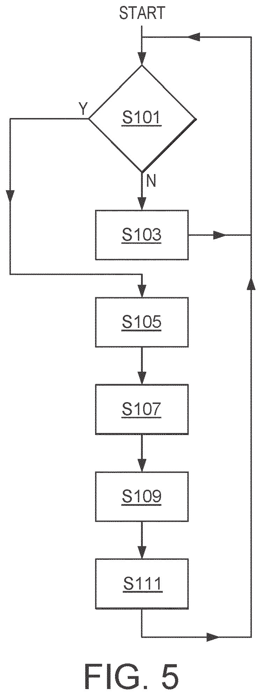

Operation of the 'max indicator set speed calculation' portion 15b is illustrated in FIG. 5.

At step 101, the 'max indicator set speed calculation' portion 15b determines whether the signal indicator_status indicates that the turn signal indicator control 21 is active. If the signal indicator_status indicates that the turn signal indicator control 21 is not active the method continues at step S103 else the method proceeds to step S105.

At step S103 the 'max indicator set speed calculation' portion 15b sets the value of indicator_set_speed to the maximum allowable value of set speed when the vehicle is operating off road with the off-road speed control system active, being a value of 30kph in the present embodiment. The method then continues at step S101.

At step 105, the 'max indicator set speed calculation' portion 15b calculates a value of indicator_set_speed based on the TRmode in which the vehicle is operating.

At step S107 the 'max indicator set speed calculation' portion 15b outputs the value of indicator_set_speed to the 'max set speed calculation' portion 15a.

At step S109 the 'max indicator set speed calculation' portion 15b calculates a value of min_acc_rate based on the TRmode in which the vehicle is operating and the value of comfort parameter received. The value of min_acc_rate is lower for higher values of comfort parameter in order to reduce occupant discomfort due to deceleration of the vehicle 10.

At step S111 the 'max indicator set speed calculation' portion 15b outputs the value of min_acc_rate to the 'vehicle acceleration calculation' portion 15c.

The method then continues at step S101.

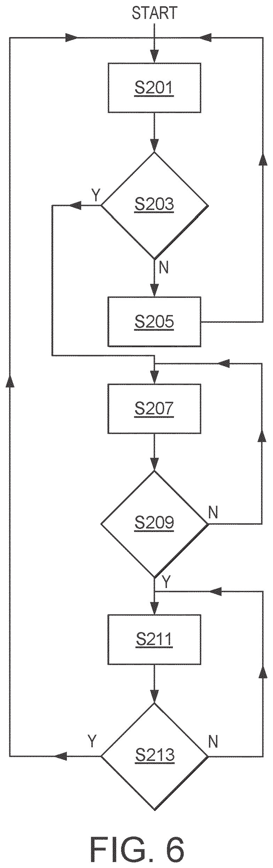

Operation of the 'max set speed calculation' portion 15a is illustrated in FIG. 6.

At step S201 the 'max set speed calculation' portion 15a determines a value of maximum allowable vehicle speed whilst under the control of the low-speed speed control system, max_set_speed, taking into account the inputs received as described above.

At step S203 the 'max set speed calculation' portion 15a determines whether the value of indicator_set_speed is lower than the value of max_set_speed calculated by reference to the other inputs received. If the value of indicator_set_speed is not lower than the value of max_set_speed calculated by reference to the other inputs received, the method continues at step S205 else the method continues at step S207.

At step S205 the 'max set speed calculation' portion 15a sets the value of max_set_speed output thereby to the value of max_set_speed calculated by reference to the inputs other than the indicator_set_speed value received. The method then continues at step S201.

At step S207, the 'max set speed calculation' portion 15a sets the value of max_set_speed output thereby to the value of indicator_set_speed. The method then continues at step S209.

At step S209 the 'max set speed calculation' portion 15a determines whether the value of max_set_speed calculated by reference to the inputs other than the indicator_set_speed value received is less than the value of indicator_set_speed due to the vehicle turning. If this is the case then the method continues at step S211 else step S207 is repeated.

At step S211 the 'max set speed calculation' portion 15a sets the value of max_set_speed output thereby to the value of max_set_speed calculated by reference to the inputs other than the indicator_set_speed value received and ignores the value of indicator_set_speed.

At step S213 the 'max set speed calculation' portion 15a checks the value of indicator_set_speed to check whether it corresponds to the maximum allowable value of max_set_speed, indicating that the indicator has been cancelled, i.e., it is no longer active. If the value of indicator_set_speed does not correspond to the maximum allowable value, indicating that the indicator has not been cancelled, the method continues at step S211 else the method continues at step S201.

It is to be understood that, in some embodiments, at step S213 the 'max set speed calculation' portion 15a may determine whether the indicator has been cancelled by reference to the signal indicator_status.

As noted above, in some embodiments the 'max set speed calculation' portion 15a may be configured to receive one or both of a signal indicative of a current location of the vehicle (determined by reference to a global satellite positioning system (GPS) output); and information obtained by means of a camera system. By way of example, the information obtained by means of a camera system may include an alert in the event that it is determined that the vehicle 10 may be about to depart from an off-road lane or track.

In the case that the 'max set speed calculation' portion 15a is configured to receive a signal indicative of a current location of the vehicle (determined by reference to a global satellite positioning system (GPS) output), the 'max set speed calculation' portion 15a may refer to map information in the form of map data corresponding to the current location of the vehicle 10 and predict a likely path of the vehicle ahead, based on the map data, which may be referred to as the geography of one or more paths ahead of the vehicle. The 'max set speed calculation' portion 15a may also take into account the direction in which the indicator_status signal indicates that the turn signal indicator control 21 has been set to indicate, i.e., indicating a left or right turn ahead. Accordingly, the VCU 15 may intelligently predict, based on the indicator_status signal and the map data, the route or path of the vehicle 10 and therefore the severity of a turn that the vehicle may be required to negotiate ahead. Thus the VCU may determine a predicted route or predicted path of the vehicle 10.

The value of this feature may be understood by considering a situation in which a first track the vehicle 10 is following bends to the right, but a second track exists that branches from the first track, requiring departure from the first track, to the left. Departing the first track to follow the second track may, nevertheless, in some cases, not require the vehicle 10 to change direction, but rather to proceed directly ahead. The VCU 15 may determine that, although a driver has elected to activate the turn signal indicator control 21 to indicate a left turn ahead, no reduction in speed is required since little or no change of direction is required for the predicted path. Alternatively, in some embodiments, the VCU 15 may nevertheless trigger a speed reduction in anticipation of a potential change in terrain when the second track is reached, necessitating a speed reduction.

In some example scenarios, a left and right turn may be present ahead, both requiring a change of direction, the left turn being sharper, requiring a more abrupt change of direction, than the right turn. Upon detecting that the driver has elected to activate the turn signal indicator control 21 to indicate a left turn ahead, the 'max indicator set speed calculation' portion 15b may set the value of indicator_set_speed to a lower value than in the event that the driver elected to activate the turn signal indicator control 21 to indicate a right turn ahead, based on the more abrupt change of direction required for the predicted path.

It is to be understood that other arrangements may be useful in some embodiments.

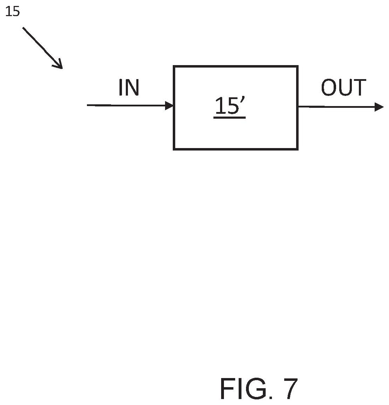

Figure 7 is a schematic illustration of an electronic controller 15' configured to implement the speed control system of the embodiment of FIG. 3.

It will be appreciated that various changes and modifications can be made to the present invention without departing from the scope of the present application.

## Claims

1. A speed control system for a vehicle, the speed control system configured to cause the vehicle to operate in accordance with a target speed, the speed control system comprising one or more controllers, the speed control system configured to:
receive a turn indicator status signal indicative of a state of a turn signal indicator control of the vehicle;
receive an occupant comfort parameter indicative of a desired level of occupant comfort;
determine a turn indicator target speed limit in dependence on the turn indicator status signal and at least in part on the occupant comfort parameter; and
control the vehicle in accordance with the turn indicator target speed limit.

2. A speed control system according to claim 1 configured to receive a terrain indicator parameter indicative of a nature of terrain over which the vehicle is travelling, wherein the turn indicator target speed limit is determined in dependence on the terrain indicator parameter.

3. A speed control system according to claim 2 wherein the terrain indicator parameter is determined in dependence on:
a signal indicative of driver selection of a terrain type; or
a signal indicative of terrain type generated by a further vehicle system in dependence on vehicle sensor information.

4. A speed control system according to any preceding claim configured to receive map information indicative of a geography of one or more paths ahead of a vehicle, wherein the turn indicator target speed limit is determined in dependence on the map information.

5. A speed control system according to claim 4 configured to:
determine a predicted route of the vehicle in dependence on the map information and the turn indicator status signal; and
determine the turn indicator target speed limit in dependence on the predicted route.

6. A speed control system according to claim 4 wherein the turn indicator status signal comprises a left turn indicator status signal or a right turn indicator status signal, the speed control system being configured to:
determine a predicted route of the vehicle in dependence on the map information and the left turn indicator status signal or the right turn indicator status signal; and
determine the turn indicator target speed limit in dependence on the predicted route.

7. A speed control system according to any preceding claim configured to:
receive vehicle turning information indicative that the vehicle is turning; and
limit vehicle speed in dependence on the vehicle turning information.

8. A speed control system according to claim 7 wherein the vehicle turning information comprises information indicative of at last one of
vehicle lateral acceleration; and
yaw rate of the vehicle,
the speed control system being configured to limit vehicle speed in dependence at least in part on one or both of vehicle lateral acceleration and yaw rate.

9. A speed control system according to any one of claims claim 7 or 8 configured to limit vehicle speed in dependence on the vehicle turning information and terminate limiting vehicle speed to the turn indicator target speed limit when the vehicle turning information indicates that vehicle speed should be reduced to a value equal to or less than the turn indicator target speed limit.

10. A speed control system according to claim 3 or any claim depending therethrough, configured wherein, when the speed control system terminates limiting vehicle speed to the turn indicator target speed limit, the speed control system does not subsequently permit the vehicle speed to be limited to the turn indicator target speed limit until after the turn indicator status signal indicates that the state of the turn indicator corresponds to neither a left turn nor a right turn.

11. A system for controlling a speed of a vehicle comprising:
a speed control system as claimed in any preceding claim; and
a turn signal indicator control configured to output a turn indicator status signal indicative of a state of the turn signal indicator control.

12. A vehicle comprising the speed control system of any of claims 1 to 10 or the system of claim 11.

13. A method of controlling a speed of a vehicle implemented by a speed control system, comprising causing the vehicle to operate in accordance with a target speed, the method further comprising:
receiving a turn indicator status signal indicative of a state of a turn indicator of a vehicle;
receiving an occupant comfort parameter indicative of a desired level of occupant comfort;
determining a turn indicator target speed limit in dependence on the turn indicator status signal and at least in part on the occupant comfort parameter;; and
controlling the vehicle in accordance with the turn indicator target speed limit.

14. A non-transitory, computer-readable storage medium storing instructions thereon that, when executed by one or more electronic processors, causes the one or more electronic processors to carry out the method of claim 14.
